# EUROPÄISCHE PATENTSCHRIFT

(11) **EP 0 421 055 B1**
(45) Veröffentlichungstag und Bekanntmachung des Hinweises auf die Patenterteilung: **17.08.1994**
(21) Anmeldenummer: 90110640.1
(22) Anmeldetag: 05.06.1990
(51) Int. Cl.: F16L 3/22

(54) **Bandelement zum Umschlingen und Haltern von Gegenständen**
Band element for the wrapping and holding of elements
Elément en bande pour emballage et fixation d'objets

(30) Priorität: 05.10.1989 DE 3933304
(43) Veröffentlichungstag der Anmeldung: 10.04.1991
(73) Patentinhaber: TRW United-Carr GmbH & Co. KG, D-67677 Enkenbach-Alsenborn (DE)
(72) Erfinder: Kraus, Willibald, D-6718 Grünstadt (DE)
(74) Vertreter: Schieschke, Klaus, Dipl.-Ing.

(56) Entgegenhaltungen:
- CH-A- 600 637
- FR-A- 1 278 958
- FR-A- 2 248 432
- FR-A- 2 552 828

## Beschreibung

Die Erfindung bezieht sich auf ein Bandelement zum Umschlingen und Haltern von Gegenständen, mit einem Lagerbereich für die zu halternden Gegenstände, bestehend aus einem Anlageteil und einem bandförmigen Umschlingungsteil mit mindestens einem Eingriffselement, welches lösbar mit mindestens einem Rastelement verbindbar ist und mit einem an den Lagerbereich anschließenden Befestigungsbereich zur Befestigung des Bandelements an einem Träger.

Als Stand der Technik sind bereits verschiedenartig gestaltete Bandelemente bekannt, welche häufig Anwendung finden zum Haltern und Zusammenfassen von elastischen Rohren, elektrischen Kabeln oder anderen, miteinander zu einem Gesamtverband zusammenzuhaltenden Teilen, beispielsweise auf dem Gebiet der Unterhaltungselektronik oder der Automobilindustrie.

Zum Stand der Technik zählt ein Bandelement mit einem mit mehreren Stegen versehenen bandförmigen Umschlingungsteil und einem gewölbten Hals mit Rastelement und hakenförmigen Eingriffsbereichen (DE-PS 28 13 484). Dieses bekannte Kabelband ist für einen speziellen Anwendungsbereich gestaltet, so daß beispielsweise eine unterschiedliche Zahl von Kabeln kleineren oder größeren Durchmessers nicht einwandfrei mit diesem Bauteil gehaltert werden können.

Weitere bekannte Kabelbänder sind gleichfalls nur für spezielle Anwendungsgebiete konzipiert und daher nicht in der Lage, vielseitig bzw. universell eingesetzt zu werden (US-PS 3 471 109, US-PS 3 930 287, US-PS 3 486 200).

Der vorliegenden Erfindung liegt damit die Aufgabe zugrunde, ein Bandelement der eingangs genannten Art zu schaffen, welches auch zum funktionssicheren Haltern von Rohren oder Kabeln unterschiedlichen Durchmessers geeignet ist und dabei einen stabilen Aufbau sowie eine leichte Montage- bzw. Demontagemöglichkeit aufweist.

Diese Aufgabe wird erfindungsgemäß dadurch gelöst, daß der zumindest teilweise gewölbt ausgebildete Anlageteil über mindestens einen durchgehenden Führungssteg mit einer Außenschale verbunden ist, daß die Außenschale auf der Außenwandung das aus mehreren sägezahnartigen Profilen bestehende Rastelement aufweist, daß das Eingriffselement eine am vorderen Ende des Umschlingungsteils liegende Rastnase ist und daß im montierten Zustand ein Teilbereich des Umschlingungsteils in dem durch den durchgehenden Führungssteg gebildeten Zwischenraum zwischen dem Anlageteil und der Außenschale eingelagert ist.

Durch das Zusammenwirken von Anlageteil und Außenwandung im Zusammenspiel mit dem durchgehenden Führungssteg wird ein stabiles Bandelement geschaffen, welches über die sägezahnartigen Profile und die Rastnase nach Einlegen der verschiedenen Kabel bzw. Rohre leicht zu schließen ist, wobei sich insgesamt eine stabile Einheit ergibt.

In weiterer Ausgestaltung der Erfindung kann der Führungssteg mittig zwischen dem Anlageteil und der Außenschale angeordnet sein. Weiterhin besteht die Möglichkeit, daß die sägezahnartigen Profile schmaler als die Breite der Außenschale sind, wobei diese sägezahnartigen Profile im mittleren Bereich der Außenschale liegen.

Nach einem weiteren Merkmal der Erfindung weist das vordere Ende des Umschlingungsteils eine umgekehrt T-förmige Aussparung auf, in deren mittleren Bereich die Rastnase angeordnet ist, wobei die oberen Begrenzungsbereiche der umgekehrt T-förmigen Aussparung sich im montierten Zustand in den Zwischenraum zwischen Anlageteil und Außenschale einlagern. Damit ist ein einfach gestaltetes Verriegelungsprinzip geschaffen, wobei im Zusammenwirken mit der Rastnase und den sägezahnartigen Profilen eine einwandfrei Verschlußmöglichkeit im montierten Zustand gegeben ist.

Oberhalb der umgekehrt T-förmigen Aussparung des Umschlingungsteils ist eine Grifflasche angeordnet, wobei in diesem Bereich die Rastnase schräg gegen den Umschlingungsteil gerichtet ist. Hierbei kann der Umschlingungsteil zwei parallel verlaufende Stege aufweisen, welche durch einen Quersteg unterbrochen sind. Um verschiedene Rohrleitung bzw. Kabel unterschiedlichen Durchmessers einwandfrei im Lagerbereich des erfindungsgemäßen Bandelements zu haltern, können der Anlageteil und/oder der Umschlingungsteil innenseitig einen federnden Arm aufweisen, wobei der federnde Arm an der Innenseite des Umschlingungsteils vorteilhafterweise aus Gründen der Stabilität im Bereich des Quersteges angeordnet ist.

Zur Erleichterung der Montage kann die Aussenschale kürzer ausgebildet sein als der Anlageteil, wobei dieser Anlageteil in einen gegen die Innenseite des Umschlingungsteils gerichteten Abschlußflansch übergeht. Der Anlageteil kann hierbei innenseitig querverlaufende Rippen besitzen, um die montierten Rohre bzw. Kabel verschiebesicher zu haltern.

Zur Befestigung des Bandelements an einem Träger kann der Befestigungsbereich mit einer Klipp-, Klebe- oder Aufschlagverbindung versehen sein, so daß diverse Befestigungsmöglichkeiten an einem Träger gegeben sind.

Die Erfindung wird nachfolgend anhand von in der Zeichnung dargestellten Ausführungsbeispielen näher beschrieben. In der Zeichnung zeigen:
- Fig. 1: eine Seitenansicht eines Bandelements im geöffneten Zustand;
- Fig. 2: eine Vorderansicht des Bandelements nach Fig. 1;
- Fig. 3: eine Draufsicht auf das Bandelement nach Fig. 1;
- Fig. 4: eine perspektivische Ansicht des Bandelements nach FIg. 1;
- Fig. 5: eine weitere Ausführungsmöglichkeit des erfindungsgemäßen Bandelements in Seitenansicht in geöffnetem Zustand;
- Fig. 6: eine perspektivische Ansicht des Bandelements nach Fig. 5 in geöffnetem Zustand.

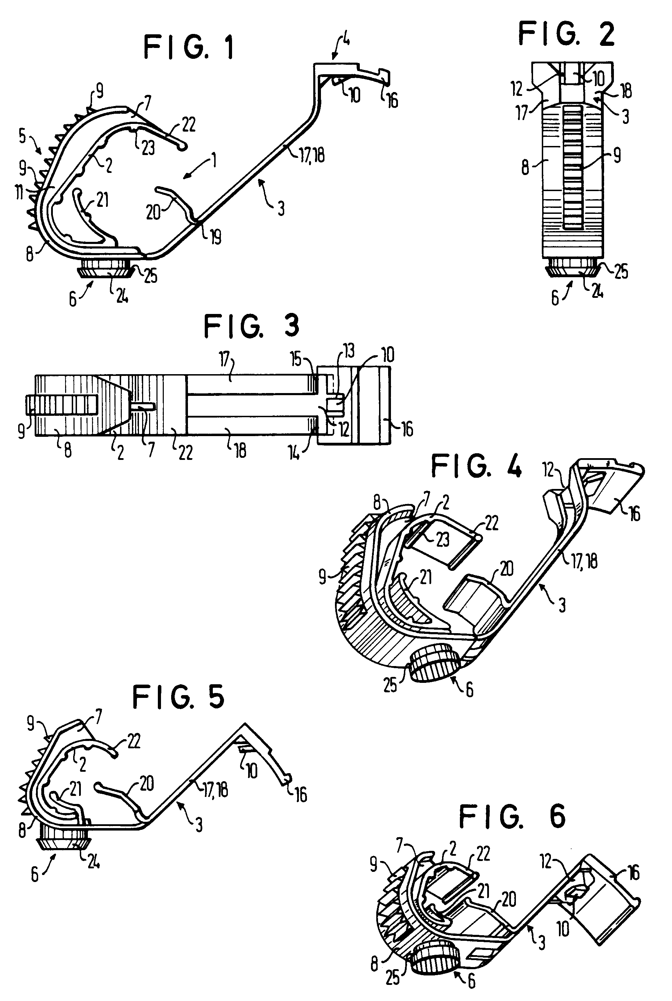

Nach Fig. 1 besteht das Bandelement zum Umschlingen und Haltern von Gegenständen insbesondere aus einem Lagerbereich 1 für die zu halternden Gegenstände mit einem Anlageteil 2, welcher zumindest teilweise gewölbt ist und einem bandförmigen Umschlingungsteil 3 mit mindestens einem Eingriffselement 4, welches lösbar mit mindestens einem Rastelement 5 verbindbar ist. Weiterhin weist das Bandelement einen an den Lagerbereich 1 anschließenden Befestigungsbereich 6 zur Befestigung dieses Bandelements an einem nicht näher dargestellten Träger auf.

Der Anlageteil 2 des Lagerbereichs 1 ist über einen durchgehenden Führungssteg 7 mit einer Außenschale 8 verbunden. Hierbei weist die Außenschale 8 auf der Außenwandung das aus mehreren sägezahnartigen Profilen 9 bestehende Rastelement auf.

Das Eingriffselement 4 ist eine am vorderen Ende des Umschlingungsteils 3 liegende Rastnase 10, welche nach Fig. 1 vorzugsweise schräg gegen den Umschlingungsteil 3 gerichtet ist. Diese Rastnase 10 befindet sich im mittleren Bereich 13 einer umgekehrt T-förmigen Aussparung 12 am vorderen Ende des Umschlingungsteils 3, wie Fig. 3 zu entnehmen ist. Die oberen Begrenzungsbereiche 14 und 15 der umgekehrt T-förmigen Aussparung gehen hierbei in zwei parallel verlaufende Stege 17 und 18 über.

Beim Schließen des Bandelements lagern sich diese Stege 17 und 18 beidseitig des durchgehenden Führungssteges 7 zwischen der Außenschale 8 und dem Anlageteil 2 in dem entsprechenden Zwischenraum 11 ein, wobei die Rastnase 10 in eines der sägezahnartigen Profile 9 eingreift und der Schließvorgang damit beendet ist. Zur Durchführung dieses Montagevorganges ist das vordere Ende des Umschlingungsteils 3 vorteilhafterweise mit einer Grifflasche 16 versehen, welche sich oberhalb der umgekehrt T-förmigen Aussparung 12 nach Fig. 3 erstreckt.

Der Anlageteil 2 und/oder der Umschlingungsteil 3 können innenseitig jeweils mindestens einen federnden Arm 20 bzw. 21 aufweisen, wobei diese federnden Arme dazu dienen, Rohre unterschiedlichen Durchmessers im Lagerbereich 1 des Bandelements einwandfrei zu haltern. Hierbei ist der federnde Arm 20 im Bereich des Umschlingungsteils 3 vorteilhafterweise oberhalb eines Quersteges 19 angeordnet, welcher die beiden parallel verlaufenden Stege 17 und 18 miteinander verbindet.

Der Anlage 2 kann innenseitig querverlaufende Rippen 23 aufweisen, welche im Zusammenwirken mit den federnden Armen 20 und 21 den zu halternden Kabeln bzw. Rohren einen weiteren sicheren Halt im Lagerbereich 1 geben.

Wie aus Fig. 3 ersichtlich, befindet sich der durchgehende Führungssteg 7 vorteilhafterweise mittig zwischen dem Anlageteil 2 und der Außenschale 8. Die sägezahnartigen Profile 9 sind hierbei nach Fig. 2 und 3 schmaler als die Breite der Außenschale 8 und entsprechend auf die Breite der Rastnase 10 abgestellt; diese sägezahnartigen Profile 9 befinden sich im mittleren Bereich der Außenschale 8.

Aus Fig. 1 und 3 ist ersichtlich, daß die Außenschale 8 kürzer ausgebildet ist, als der Anlageteil 2. Hierbei geht der Anlageteil 2 in einen gegen die Innenseite des Umschlingungsteils 3 gerichteten Abschlußflansch 22 über. Dieser Abschlußflansch 22 ist elastisch federnd ausgebildet und verengt vorteilhafterweise den Lagerbereich 1, um die zu halternden Rohre bzw. Kabel besser erfassen zu können. Im geschlossenen Zustand legt sich die Innenseite des Umschlingungsteils 3 mit den beiden federnden Stegen 17 und 18 auf der Oberfläche des Abschlußflansches 22 auf.

Wie aus Fig. 1 ersichtlich, verlaufen der Anlageteil 2 und die Außenschale 8 im unteren Bereich über einen bestimmten Teil annähernd äquidistant; im oberen Bereich erweitert sich der durch den durchgehenden Führungssteg 7 gebildete Zwischenraum 11 konisch, d.h. der Anlageteil 2 und die Außenschale 8 verlaufen schräg zueinander bis etwa an das vordere Ende, bei welchem der Führungssteg 7 schräg in den Abschlußflansch 22 übergeht.

Bei der Ausführungsform nach Fig. 5 und 6 finden wiederum federnde Arme 20 und 21 Anwendung, welche jedoch im Gegensatz zu der Ausführungsform nach Fig. 1 anders gestaltet sind. Auch bei dieser Ausführungsform ist wiederum eine Rastnase 10 vorhanden, welche mit den sägezahnartigen Profilen 9 des Rastelements 5 zusammenwirkt, die sich auf der Oberseite der Außenschale 8 befinden. Auch hier ist ein durchgehender Führungssteg 7 vorhanden, welcher im vorderen Bereich in den Abschlußflansch 22 übergeht. Bei dieser Ausführungsform ist das vordere Ende des Umschlingungsteils 3 gleichfalls mit einer umgekehrt T-förmigen Aussparung 12 versehen, wobei jedoch der Umschlingungsteil geradlinig nach Fig. 5 verläuft und am vorderen Ende etwa rechtwinklig in die Grifflasche 16 übergeht; im Gegensatz dazu ist bei der Ausführungsform nach Fig. 1 bis 4 der Umschlingungsteil 3 im vorderen Bereich abgewinkelt, wobei sich in diesem abgewinkelten vorderen Bereich die Grifflasche 16 sowie die umgekehrt T-förmige Aussparung 12 befinden.

Auch bei der Ausführungsform nach Fig. 5 und 6 sind wiederum parallel verlaufende Stege 17 und 18 vorhanden, welche den Umschlingungsteil 3 bilden.

Durch die erfindungsgemäße Konstruktion wird ein Bandelement geschaffen, welches sehr stabil aufgebaut und in der Lage ist, auch Rohre bzw. Kabel unterschiedlichen Durchmessers einwandfrei zu haltern.

Der Befestigungsbereich 6 dieses Bandelements kann beispielsweise mit einer Klipp-, Klebe- oder Aufschlagverbindung 24 versehen sein. Bei der Ausführungsform nach Fig. 1 und 5 besteht der Befestigungsbereich 6 aus einem zylindrischen Körper mit einer umlaufenden Kante, wobei im Inneren parallel verlaufende Rippen angeordnet sind. Dieser Befestigungsbereich läßt sich auf ein Zwischenelement aufklippen, welches mit einander gegenüberliegenden Nasen in die Kanten 25 des Befestigungsbereichs 6 eingreift.

## Patentansprüche

1. Bandelement zum Umschlingen und Haltern von Gegenständen, mit einem Lagerbereich für die zu halternden Gegenstände, bestehend aus einem Anlageteil und einem bandförmigen Umschlingungsteil mit mindestens einem Eingriffselement, welches lösbar mit mindestens einem Rastelement verbindbar ist und mit einem an den Lagerbereich anschließenden Befestigungsbereich zur Befestigung des Bandelements an einem Träger, dadurch gekennzeichnet,
daß der zumindest teilweise gewölbt ausgebildete Anlageteil (2) über mindestens einen durchgehenden Führungssteg (7) mit einer Außenschale (8( ) verbunden,
daß die Außenschale (8) auf der Außenwandung das aus mehreren sägezahnartigen Profilen (9) bestehende Rastelement (5) aufweist,
daß das Eingriffselement (4) eine am vorderen Ende des Umschlingungsteils (3) liegende Rastnase (10) ist und
daß im montierten Zustand ein Teilbereich des Umschlingungsteils in dem durch den durchgehenden Führungssteg (7) gebildeten Zwischenraum (11) zwischen dem Anlageteil (2) und der Außenschale (8) eingelagert ist.

2. Bandelement nach Anspruch 1, dadurch gekennzeichnet, daß der durchgehende Führungssteg (7) mittig zwischen dem Anlageteil (2) und der Außenschale (8) angeordnet ist.

3. Bandelement nach Anspruch 1, dadurch gekennzeichnet, daß die sägezahnartigen Profile (9) schmaler als die Breite der Außenschale (8) sind.

4. Bandelement nach Anspruch 1, dadurch gekennzeichnet, daß die sägezahnartigen Profile (9) im mittleren Bereich der Außenschale (8) angeordnet sind.

5. Bandelement nach einem der vorhergehenden Ansprüche, dadurch gekennzeichnet, daß das vordere Ende des Umschlingungsteils (3) eine umgekehrt T-förmige Aussparung (12) aufweist, in deren mittleren Bereich (13) die Rastnase (10) angeordnet ist und daß die oberen Begrenzungsbereiche (14, 15) der umgekehrt T-förmigen Aussparung (12) sich im montierten Zustand in den Zwischenraum (11) zwischen Anlageteil (2) und Außenschale (8) einlagern.

6. Bandelement nach Anspruch 5, dadurch gekennzeichnet, daß oberhalb der umgekehrt T-förmigen Aussparung (12) des Umschlingungsteils (3) eine Grifflasche (16) angeordnet ist.

7. Bandelement nach Anspruch 5 und 6, dadurch gekennzeichnet, daß die Rastnase (10) schräg gegen den Umschlingungsteil (3) gerichtet ist.

8. Bandelement nach einem der vorhergehenden Ansprüche, dadurch gekennzeichnet, daß der Umschlingungsteil (3) zwei parallel verlaufende Stege (17, 18) aufweist.

9. Bandelement nach Anspruch 8, dadurch gekennzeichnet, daß die Stege (17, 18) durch einen Quersteg (19) unterbrochen sind.

10. Bandelement nach einem der vorhergehenden Ansprüche, dadurch gekennzeichnet, daß der Anlageteil (2) und/oder der Umschlingungsteil (3) innenseitig einen federnden Arm (20, 21) aufweisen.

11. Bandelement nach Anspruch 9 und 10, dadurch gekennzeichnet, daß der federnde Arm (20) an der Innenseite des Umschlingungsteils (3) im Bereich des Quersteges (19) angeordnet ist.

12. Bandelement nach einem der vorhergehenden Ansprüche, dadurch gekennzeichnet, daß die Außenschale (8) kürzer ausgebildet ist als der Anlageteil (2).

13. Bandelement nach Anspruch 12, dadurch gekennzeichnet, daß der Anlageteil (2) in einen gegen die Innenseite des Umschlingungsteils (3) gerichteten Abschlußflansch (22) übergeht.

14. Bandelement nach Anspruch 13, dadurch gekennzeichnet, daß der Anlageteil (2) innenseitig querverlaufende Rippen (23) aufweist.

15. Bandelement nach einem der vorhergehenden Ansprüche, dadurch gekennzeichnet, daß zur Befestigung des Bandelements an einem Träger der Befestigungsbereich (6) mit einer Klipp-, Klebe- oder Auschlagverbindung (24) versehen ist.

## Claims

1. Band element for wrapping around and fastening objects, comprising a receiving region for the objects to be fastened which consists of a support part and a band-like wrap-around part having at least one engaging element detachably connectable to at least one catch element, and further comprising, adjoining the receiving region, a fastening region for fastening the band element to a carrier, characterised in that
the at least partially arched support part (2) is connected by at least one continuous guide web (7) to an outer shell (8),
in that the outer shell (8) has on its outer wall the catch element (5) consisting of a plurality of serrated profiles (9),
in that the engaging element (4) is a catch beak (10) situated at the front end of the wrap-around part (3), and
in that in the fitted state a portion of the wrap-around part is received in the gap (11), formed by the continuous guide web (7), between the support part (2) and the outer shell (8).

2. Band element according to Claim 1, characterised in that the continuous guide web (7) is arranged centrally between the support part (2) and the outer shell (8).

3. Band element according to Claim 1, characterised in that the serrated profiles (9) are narrower than the width of the outer shell (8).

4. Band element according to Claim 1, characterised in that the serrated profiles (9) are arranged in the middle region of the outer shell (8).

5. Band element according to one of the preceding claims, characterised in that the front end of the wrap-around part (3) has an inverted T-shaped cutout (12) in the middle region (13) of which the catch beak (10) is disposed, and in that the top boundary regions (14, 15) of the inverted T-shaped recess (12) are received in the fitted state in the gap (11) between the support part (2) and the outer shell (8).

6. Band element according to Claim 5, characterised in that above the inverted T-shaped recess (12) in the wrap-around part (3) a gripping tongue (16) is disposed.

7. Band element according to Claims 5 and 6, characterised in that the catch beak (10) is directed obliquely towards the wrap-around part (3).

8. Band element according to one of the preceding claims, characterised in that the wrap-around part (3) has two webs (17, 18) extending parallel.

9. Band element according to Claim 8, characterised in that the webs (17, 18) are interrupted by a transverse web (19).

10. Band element according to one of the preceding claims, characterised in that the support part (2) and/or the wrap-around part (3) has or have on the inner side a resilient arm (20, 21).

11. Band element according to Claim 9 or 10, characterised in that the resilient arm (20) is disposed on the inner side of the wrap-around part (3) in the region of the transverse web (19).

12. Band element according to one of the preceding claims, characterised in that the outer shell (8) is made shorter than the support part (2).

13. Band element according to Claim 12, characterised in that the support part (2) merges into an end flange (22) directed towards the inner side of the wrap-around part (3).

14. Band element according to Claim 13, characterised in that the support part (2) has transversely extending ribs (23) on its inner side.

15. Band element according to one of the preceding claims, characterised in that for the purpose of fastening the band element to a carrier the fastening region (6) is provided with a clip connection, adhesive connection or knock-on connection (24).

## Revendications

1. Elément en bande pour ceinturer et retenir des objets, comprenant une zone d'appui destinée aux objets devant être retenus, constituée d'une partie de contact et d'une partie d'enlacement en forme de ruban, pourvue d'au moins un élément de venue en prise pouvant être relié, de manière libérable, à au moins un élément d'encrantage ; et une zone de fixation attenante à la zone d'appui, en vue de la fixation de l'élément en bande à un support, caractérisé par le fait que la partie de contact (2), de réalisation au moins partiellement bombée, est reliée à une coquille extérieure (8) par l'intermédiaire d'au moins une nervure ininterrompue de guidage (7) ;
que la coquille extérieure (8) présente, sur la paroi externe, l'élément d'encrantage (5) composé de plusieurs profils (9) en dents de scie ;
que l'élément (4) de venue en prise est un bec encrantable (10) situé à l'extrémité antérieure de la partie d'enlacement (3) ; et
que, à l'état monté, une région partielle de la partie d'enlacement est logée dans l'espace intercalaire (11) entre la partie de contact (2) et la coquille extérieure (8), formé par la nervure ininterrompue de guidage (7)

2. Elément en bande selon la revendication 1, caractérisé par le fait que la nervure ininterrompue de guidage (7) occupe une position centrale entre la partie de contact (2) et la coquille extérieure (8).

3. Elément en bande selon la revendication 1, caractérisé par le fait que les profils (9) en dents de scie sont plus étroits que la largeur de la coquille extérieure (8).

4. Elément en bande selon la revendication 1, caractérisé par le fait que les profils (9) en dents de scie se trouvent dans la région centrale de la coquille extérieure (8).

5. Elément en bande selon l'une des revendications précédentes, caractérisé par le fait que l'extrémité antérieure de la partie d'enlacement (3) présente une échancrure (12) en forme de T inversé, dans la région centrale (13) de laquelle le bec encrantable (10) est disposé ; et par le fait que les régions supérieures de délimitation (14, 15) de l'échancrure (12) en forme de T inversé viennent se loger, à l'état monté, dans l'espace intercalaire (11) entre la partie de contact (2) et la coquille extérieure (8).

6. Elément en bande selon la revendication 5, caractérisé par le fait qu'une patte de préhension (16) est disposée au-dessus de l'échancrure (12) en forme de T inversé de la partie d'enlacement (3).

7. Elément en bande selon les revendications 5 et 6, caractérisé par le fait que le bec encrantable (10) est orienté à l'oblique vers la partie d'enlacement (3).

8. Elément en bande selon l'une des revendications précédentes, caractérisé par le fait que la partie d'enlacement (3) présente deux membrures (17, 18) s'étendant parallèlement.

9. Elément en bande selon la revendication 8, caractérisé par le fait que les membrures (17, 18) sont interrompues par une membrure transversale (19).

10. Elément en bande selon l'une des revendications précédentes, caractérisé par le fait que la partie de contact (2) et/ou la partie d'enlacement (3) comporte(nt) intérieurement un bras élastique (20, 21)

11. Elément en bande selon les revendications 9 et 10, caractérisé par le fait que le bras élastique (20) se trouve à la face interne de la partie d'enlacement (3), dans la région de la membrure transversale (19).

12. Elément en bande selon l'une des revendications précédentes, caractérisé par le fait que la coquille extérieure (8) est réalisée plus courte que la partie de contact (2).

13. Elément en bande selon la revendication 12, caractérisé par le fait que la partie de contact (2) fusionne dans une aile d'extrémité (22), orientée vers la face interne de la partie d'enlacement (3).

14. Elément en bande selon la revendication 13, caractérisé par le fait que la partie de contact (2) présente, intérieurement, des nervures (23) s'étendant transversalement.

15. Elément en bande selon l'une des revendications précédentes, caractérisé par le fait que la zone de fixation (6) est dotée d'une liaison (24) enclipsée, collée ou pivotante, en vue de la fixation de l'élément en bande à un support.
